Europäisches Patentamt

European Patent Office

Office européen des brevets

(11) Numéro de publication: **0 365 374**
**A1**

(12) # DEMANDE DE BREVET EUROPEEN

(21) Numéro de dépôt: **89402520.4**

(22) Date de dépôt: **14.09.89**

(51) Int. Cl.5: **G21C 13/06 , B25B 29/02**

(30) Priorité: **27.09.88 FR 8812603**

(43) Date de publication de la demande:
**25.04.90 Bulletin 90/17**

(84) Etats contractants désignés:
**BE CH DE ES GB IT LI NL SE**

(71) Demandeur: **FRAMATOME**
**Tour Fiat 1, Place de la Coupole**
**F-92400 Courbevoie(FR)**

(72) Inventeur: **Frizot, Alain**
**15 Chemin Bas du Moulin**
**F-77710 Montcenis(FR)**

(74) Mandataire: **Lanceplaine, Jean-Claude et al**
**CABINET LAVOIX 2, Place d'Estienne**
**d'Orves**
**F-75441 Paris Cédex 09(FR)**

(54) **Dispositif de manutention d'une machine d'extension d'éléments de liaison vissés.**

(57) Le dispositif de manutention d'une machine
d'extension d'éléments de liaison vissés (3) constitué notamment par des boulons ou des goujons
destinés à la fixation par exemple d'un couvercle (1)
d'une cuve (2) comprend un module d'extension (20)
des éléments de liaison (3), des moyens (10, 11, 12)
de ce module d'extension (20) selon un plan horizontal, et des moyens (15, 22, 24) de déplacement
dudit module d'extension (20) selon l'axe vertical
des éléments de liaison (3).

FIG.1

EP 0 365 374 A1

## Dispositif de manutention d'une machine d'extension d'éléments de liaison vissés

La présente invention a pour objet un dispositif de manutention d'une machine d'extension d'éléments de liaison vissés tels que des boulons ou goujons.

Dans les installations industrielles mettant en oeuvre des éléments de liaison vissés, on exerce pendant les opérations de serrage et de déserrage, une traction sur lesdits éléments par l'intermédiaire d'une machine d'extension en vue de les maintenir en état de précontrainte.

C'est le cas pour les cuves sous pression telles que des cuves de réacteurs nucléaires, où le couvercle est fixé de manière amovible sur la cuve afin de permettre le rechargement périodique en combustible du réacteur nucléaire et à la faveur de celui-ci une inspection à l'intérieur de la cuve et des éléments situés à l'intérieur de ladite cuve.

A cet effet, le couvercle est fixé sur la cuve du réacteur par des goujons qui sont vissés dans la bride de la cuve et qui pénètrent dans des trous lisses prévus dans la bride du couvercle. Ces goujons sont généralement employés en assez grand nombre et relativement rapprochés les uns des autres, si bien que le démontage et le remontage du couvercle nécessite le dévissage et le vissage de tous ces goujons après relâchement de l'état de précontrainte réalisé par la machine d'extension.

On connaît par exemple dans les FR-A-2.329.414 et FR-A-2.274.997 des machines d'extension composées d'un ensemble de tendeurs hydrauliques, fixés et répartis en symétrie polaire sur un anneau porteur. Les tendeurs hydrauliques agissent simultanément et obtiennent la précontrainte Ordésirée sur chaque goujon.

Ces machines ont généralement une infrastructure imposante, constituée d'un anneau porteur en une seule pièce ce qui ne permet pas leur installation dans le cas où la cuve du réacteur nucléaire est située dans un environnement relativement étroit et entourée d'éléments non démontables.

Le but de l'invention est donc de proposer un dispositif de manutention d'une machine d'extension d'éléments de liaison vissés permettant de s'affranchir de tout environnement constitué d'éléments non démontables et d'intervenir sans le concours du pont polaire de la cuve ce qui réduit sensiblement le coût relatif à ce type d'intervention.

Suivant l'invention, le dispositif de manutention d'une machine d'extension d'éléments de liaison vissés constitués notamment par des boulons ou goujons destinés à la fixation par exemple d'un couvercle d'une cuve, est caractérisé en ce qu'il comprend au moins un module d'extension des éléments de liaison, des moyens de déplacement de ce module d'extension selon un plan horizontal et des moyens de déplacement dudit module d'extension selon l'axe vertical des éléments de liaison.

Selon d'autres caractéristiques de l'invention :
- les moyens de déplacement horizontal du module d'extension sont constitués par des éléments modulaires assemblés formant un chemin de roulement sur lequel se déplace un train supportant ledit module d'extension,
- le train comporte un chariot menant et un chariot mené munis chacun d'un ensemble de roues de guidage et reliés entre eux par une entretoise,
- et les moyens de déplacement vertical du module d'extension sont constitués par une vis sans fin verticale montée libre en rotation sur chaque chariot et par un écrou vissé sur chacune des vis sans fin et relié chacun audit module d'extension par une patte.

Afin de bien faire comprendre l'invention, on va maintenant décrire, en se reportant aux figures annexées, un mode de réalisation du dispositif suivant l'invention.

- La figure 1 est une vue en plan du couvercle d'une cuve de réacteur nucléaire à proximité duquel est installé le dispositif suivant l'invention ;
- la figure 2 est une vue de dessus de la figure 1;
- la figure 3 est une vue en élévation et à plus grande échelle d'un chariot du dispositif suivant l'invention ;
- la figure 4 est une demi-vue à plus grande échelle en coupe d'un écrou sur la vis sans fin correspondante.

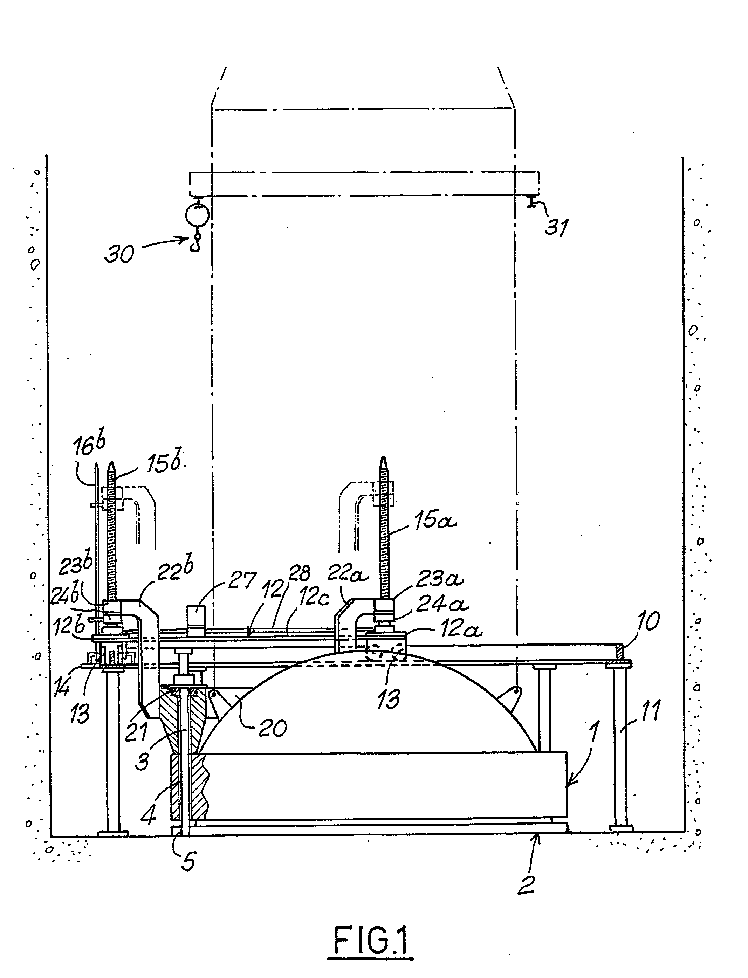

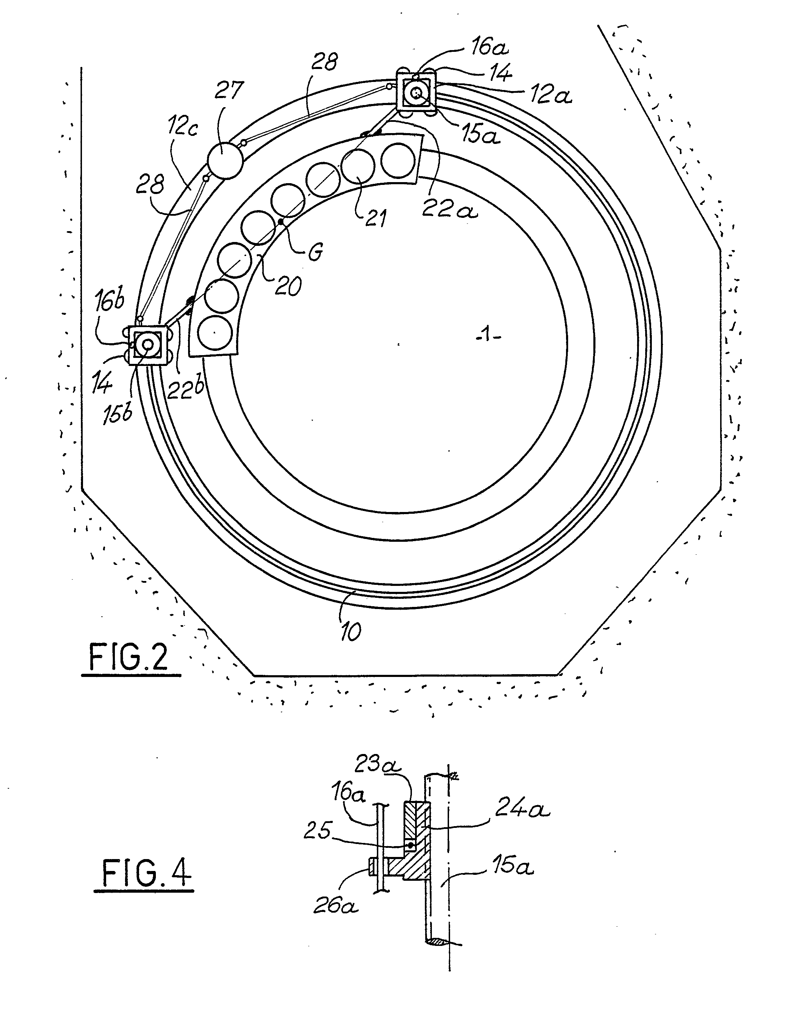

Le dispositif conforme à l'invention tel qu'il est représenté aux figures 1 et 2 est utilisé pour la manutention d'une machine d'extension destinée à exercer une traction sur les goujons en vue de les maintenir dans l'état de précontrainte de façon à permettre l'accostage ou le désaccostage dans cette position des écrous de maintien du couvercle 1, d'une cuve 2, par exemple d'un réacteur nucléaire, qui déborde légèrement au-dessus d'un plancher d'un bâtiment dont les murs limitent l'espace disponible autour du couvercle.

Comme cela est bien connu, le couvercle 1 et la cuve 2 ont une forme de révolution autour d'un axe géométrique vertical. Le couvercle 1 est fixé de manière détachable sur la cuve 2 au moyen de plusieurs goujons 3 d'axe vertical, avec les écrous associés, lesdits goujons étant régulièrement répartis à la périphérie du couvercle 1 de la cuve.

Chaque goujon 3 passe à travers un trou lisse 4 prévu verticalement dans la bride du couvercle 1 et est muni, à sa partie inférieure, d'un filetage destiné à être vissé dans un trou taraudé 5 de la bride de la cuve 2. L'autre extrémité du goujon 3 dépasse à l'extérieur du couvercle 1.

Le dispositif comporte un monorail de guidage 10 composé par exemple de quatre secteurs assemblés, facilitant ainsi son installation dans l'espace disponible. Le monorail de guidage 10 est monté autour du couvercle 1 et chaque quart est supporté par deux colonnes 11. Une fois le monorail assemblé, les colonnes 11 se trouvent réparties à distance égale.

Sur le monorail 10 se déplace un train désigné dans son ensemble par la référence 12 et qui se compose d'un chariot menant 12a et d'un chariot mené 12b, lesdits chariots 12a et 12b étant reliés entre eux par une entretoise 12c semi-circulaire et de même courbure que le monorail 10.

Chaque chariot 12a, 12b dispose d'un ensemble de roues 13 et 14, les unes 13 à axe horizontal permettant le guidage longitudinal, les autres 14 à axe vertical permettant le guidage latéral.

D'autre part, chaque chariot 12a et 12b est surmonté d'une part d'une vis sans fin respectivement 15a et 15b verticale, montée libre en rotation, et d'autre part d'une tige anti-rotation respectivement 16a et 16b disposée parallèlement à la vis vérin et dont le rôle sera précisé ultérieurement.

Le train 12 supporte un module d'extension 20 qui, dans l'exemple représenté sur les figures 1 et 2, a la forme d'un arc de cercle de même centre que celui de la bride du couvercle 1 et comporte huit pistons de vérin 21 dont la disposition et l'aménagement sont identiques au piston de vérin décrit dans le FR-A-2.589.536 au nom de la Demanderesse.

Le module 20 est relié symétriquement aux deux chariots 12a et 12b à l'aide de deux pattes 22a et 22b.

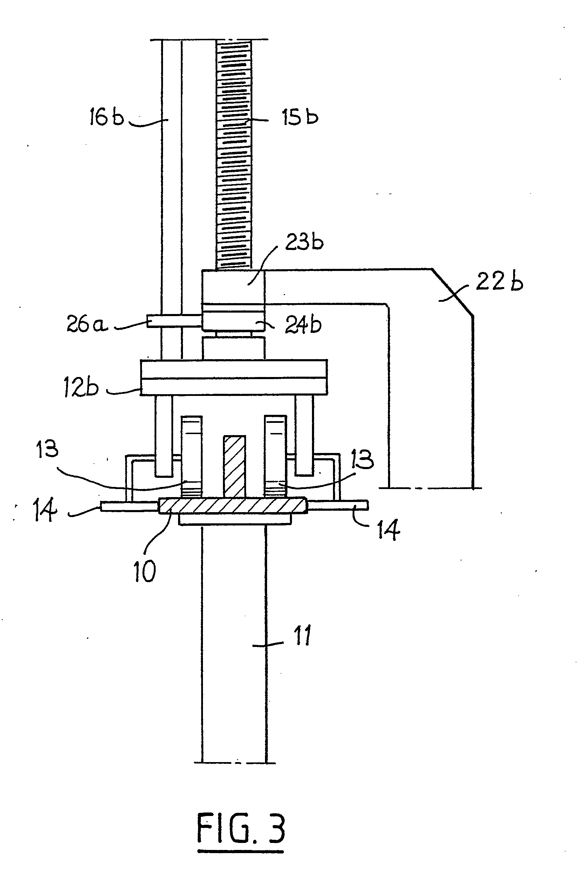

La patte 22a est soudée au module d'extension 20 par l'une de ses extrémités et l'autre extrémité comporte un oeilleton 23a dont l'axe de l'alésage est vertical et vient, d'une part se centrer sur la partie cylindrique d'un écrou 24a vissé sur la vis sans fin 15a et d'autre part en appui sur ledit écrou par l'intermédiaire d'une butée à billes 25 (figure 3).

L'écrou 24a dispose également d'un appendice 26a dans lequel est ménagé un orifice au travers duquel passe la tige anti-rotation 16a.

Il en est de même pour la patte 22b qui est soudée par l'une de ses extrémités au module d'extension 20 et qui comporte à l'autre de ses extrémités un oeilleton 23b centré sur un écrou 24b vissé sur la vis sans fin 15b.

L'écrou 24b comporte également un appendice 26b au travers duquel passe la tige anti-rotation 16b.

La mise en rotation des deux vis sans fin 15a et 15b est commandée par un seul moteur 27 monté sur l'entretoise 12c et à mi-chemin entre les deux chariots 12a et 12b. Le moteur 27 est relié à chacune des vis sans fin 15a et 15b par une tringlerie de commande 28 constituée par exemple par une transmission à cardans.

Le dispositif fonctionne de la manière suivante.

Tout d'abord, les différents éléments séparés peuvent être mis en place à l'aide d'un palan 30 qui se déplace au moyen d'un monorail circulaire 31 disposé au-dessus du couvercle 1. Une fois l'installation terminée et le module d'extension 20 étant en position haute comme représenté schématiquement en traits mixtes sur la figure 1, l'opérateur commande la mise en route du moteur du chariot menant 12a. Ainsi, l'ensemble se déplace sur le monorail 10 de telle sorte que le module d'extension vienne se positionner au-dessus de la première série de goujons 3 à mettre en traction.

Ensuite, l'opérateur commande la mise en route du moteur 27 qui entraîne en rotation par l'intermédiaire des tringleries de commande 28, les deux vis sans fin 15a et 15b. La rotation dans un sens déterminé de ces deux vis sans fin 15a et 15b provoque la descente du module d'extension 20 par l'intermédiaire des écrous 24a et 24b et des pattes 22a et 22b.

Les extrémités des goujons 3 pénètrent dans les pistons de vérin 21 du module d'extension 20 dont la face inférieure vient en appui sur la bride du couvercle 1.

Comme cela est décrit dans le FR-A-2.589.536, les pistons de vérin 21 du module d'extension 20 effectuent une traction simultanément sur la série de goujons 3 de façon à réaliser les différentes opérations de vissage ou de dévissage des écrous de maintien du couvercle 1.

Lorsque ces opérations sont réalisées pour la première série de goujons, l'opérateur commande, par le moteur 27 et les tringleries de commande 28, la mise en rotation en sens inverse des vis sans fin 15a, 15b provoquant ainsi la remontée du module d'extension 20.

Les vis vérin 15a et 15b sont placées exactement dans le plan du centre de gravité G du module d'extension 20, de sorte que les déplacements verticaux de ce module d'extension sont réalisés sans effort latéral parasite, ni de torsion.

De plus, au cours de ces déplacements verticaux, les tiges 16a et 16b empêchent toute rotation des écrous 24a et 24b.

Dès que le module d'extension 20 se trouve en position haute, l'opérateur commande le déplacement de l'ensemble pour effectuer l'extension de la série de goujons suivante et ainsi de suite.

Le dispositif peut comporter deux machines d'extension qui se déplacent sur le même monorail 10 et qui effectuent la mise en extension simultanément sur des séries de goujons opposés.

Par ailleurs, chaque module d'extension peut être composé au minimum d'un seul piston de vérin et au maximum de huit pistons de vérin.

Le dispositif selon l'invention permet donc de faire circuler une machine modulaire de tensionnement de goujons selon deux directions, horizontalement autour de l'axe du diamètre de perçage, et alternativement selon l'axe vertical des goujons sur lesquels il faut intervenir.

De plus, ce dispositif se compose d'une association d'éléments possédant des fonctions différentes, mais complémentaires telles que de manutentionner, de positionner, et de tensionner, permettant une approche de la zone d'intervention aussi bien par le haut que par le côté et ainsi de s'affranchir de tout environnement constitué d'éléments non démontables.

Le dispositif suivant l'invention s'applique non seulement aux cuves de réacteurs nucléaires, mais à d'autres secteurs de l'industrie nucléaire, aux installations pétrolières et pétrochimiques. De façon générale, le dispositif suivant l'invention s'applique dans le cas de nombreuses installations industrielles mettant en oeuvre des cuves sous pression.

**Revendications**

1. Dispositif de manutention d'une machine d'extension d'éléments de liaison vissés (3) constitués notamment par des boulons ou des goujons destinés à la fixation par exemple d'un couvercle (1) d'une cuve (2), caractérisé en ce qu'il comprend un module d'extension (20) des éléments de liaison (3), des moyens (10, 11, 12) de déplacement de ce module d'extension (20) selon un plan horizontal, et des moyens (15, 22, 24) de déplacement dudit module d'extension (20) selon l'axe vertical des éléments de liaison (3).

2. Dispositif de manutention selon la revendication 1, caractérisé en ce que les moyens de déplacement horizontal du module (20) sont constitués par des éléments modulaires assemblés formant un chemin de roulement (10) sur lequel se déplace un train (12) supportant ledit module d'extension.

3. Dispositif de manutention selon la revendication 2, caractérisé en ce que le train (12) comporte un chariot menant (12a) et un chariot mené (12b) munis chacun d'un ensemble de roues de guidage (13, 14) et reliés entre eux par une entretoise (12c).

4. Dispositif de manutention selon la revendication 3, caractérisé en ce que l'entretoise (12c) est semi-circulaire.

5. Dispositif de manutention selon l'une des revendications précédentes, caractérisé en ce que les moyens de déplacement vertical du module d'extension sont constitués par une vis sans fin (15a, 15b) verticale montée libre en rotation sur chaque chariot (12a, 12b) et par un écrou (24a, 24b) vissé sur chacune des vis sans fin (15a, 15b) et relié chacun audit module d'extension par une patte (22a, 22b).

6. Dispositif de manutention selon la revendication 5, caractérisé en ce que chaque vis sans fin (15a, 15b) est entraînée en rotation par un moteur unique (27) monté sur l'entretoise (12c) à mi-chemin entre les deux chariots (12a, 12b) et relié à chacune des vis sans fin (15a, 15b) par une tringlerie de commande (28).

7. Dispositif de manutention selon la revendication 5, caractérisé en ce que chaque patte (22a, 22b) est solidaire du module d'extension (20) par l'une de ses extrémités et comporte à son extrémité opposée un oeilleton (23a, 23b) centré sur l'écrou correspondant (24a, 24b) et en appui sur ledit écrou correspondant par l'intermédiaire d'une butée à billes (25).

8. Dispositif de manutention selon l'une des revendications précédentes, caractérisé en ce que chaque écrou (24a, 24b) comporte un appendice (26a, 26b) muni d'un orifice au travers duquel passe une tige anti-rotation (16a, 16b) verticale disposée sur chaque chariot (12a, 12b) parallèlement à la vis sans fin (15a, 15b).

9. Dispositif de manutention selon l'une des revendications précédentes, caractérisé en ce que les vis sans fin (15a, 15b) sont disposées dans le plan du centre de gravité du module d'extension (20).

FIG.1

FIG.2

FIG.4

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 152 873  (WESTINGSHOUSE) * Page 4, ligne 40 - page 5, ligne 15; page 7, lignes 22-34; page 8, lignes 9-33; figures 1,2,6,7 * --- | 1 | G 21 C  13/06 B 25 B  29/02 |
| A | EP-A-0 242 400  (THE JAPAN STEEL WORKS, LTD) * Page 17, alinéa 3; pages 18,19; figure 1 * --- | 1-3 | |
| A | FR-A-2 400 412  (KWU) * Page 1, lignes 27-36; page 4, ligne 20 - page 5, ligne 37; figures 1,2 * --- | 1,2,9 | |
| A,D | EP-A-0 222 625  (FRAMATOME) * Colonne 3, lignes 1-25; colonne 4, ligne 26 - colonne 5, ligne 23; figures 1,2,5,6 * & FR-A-2 589 536 ----- | 1 | |

DOMAINES TECHNIQUES RECHERCHES (Int. Cl.5)

G 21 C  13/00
B 25 B  29/00
B 25 P  19/00

Le présent rapport a été établi pour toutes les revendications

| Lieu de la recherche | Date d'achèvement de la recherche | Examinateur |
|---|---|---|
| LA HAYE | 01-02-1990 | JANDL F. |